# EUROPEAN PATENT SPECIFICATION

(11) **EP 3 127 277 B1**
(45) Date of publication and mention of the grant of the patent: **15.01.2020**
(21) Application number: 15714262.1
(22) Date of filing: 26.03.2015
(51) Int. Cl.: H04B 3/54, H04W 24/04, H04L 29/08, H04L 12/851, H04L 12/24, H04W 84/12, H04L 12/26, H04W 24/08

(54) **NETWORK MONITOR**
NETZWERKMONITOR
SURVEILLANCE DE RÉSEAU

(30) Priority: 31.03.2014 EP 14250060; 31.03.2014 EP 14250061; 30.06.2014 EP 14175108
(43) Date of publication of application: 08.02.2017
(73) Proprietor: British Telecommunications public limited company, London EC1A 7AJ (GB)
(72) Inventor: TOWNEND, David, London EC1A 7AJ (GB); SCAHILL, Francis, London EC1A 7AJ (GB); RINGLAND, Simon, London EC1A 7AJ (GB)
(74) Representative: British Telecommunications public limited company Intellectual Property Department
(86) International application number: PCT/GB2015/050906
(87) International publication number: WO 2015/150743

(56) References cited:
- US-A1- 2007 105 544
- US-A1- 2011 096 678
- US-A1- 2013 157 688
- US-A1- 2013 294 263
- US-B1- 8 392 712

## Description

The present invention relates to data communications and in particular to a method, apparatus and system for detecting device interoperability issues.

### Background

In order to access wide area networks such as the Internet, customers at home and commercial premises use a broadband network between the customer premises and an Internet Service Provider (ISP) such as the BT Total Broadband service offered by British Telecommunications pic.

Typically, the customer premises is connected to the ISP equipment via a copper line, a combination of copper and optical fibre lines or optical fibre lines. Examples of such arrangements include ADSL, VDSL (collectively referred to as xDSL), FTTP and DOCSIS.

The broadband connection links the customer to services available on wide area networks such as the Internet thereafter to a wide range of remotely located application servers and services.

In the case of a DSL broadband network, the ISP has equipment located at an exchange building servicing multiple premises, and data from the wide area network is routed to the customer via a DSLAM or mini DSLAM.

At the user premises, a modem converts the broadband/DSL signal into a home network format such as Ethernet and a router then provides routing capability so that multiple home network devices such as computers, laptops, tablets and phones can share the bandwidth of the connection.

To accommodate device mobility, a wireless access point distributes the Ethernet packets over an air interface, typically in accordance with the IEEE 802.11 family of protocols. These are commonly referred to as Wi-Fi. At present the latest standard is 802.11ac while 802.11n, 802.11g and 802.11b are still common. Using Wi-Fi, wireless devices can send data to and receive data from local and remote services via the access point.

Typically the modem, router and wireless access point functions are integrated into the same physical unit. Examples are the BT Home Hub 4 which combines an ADSL modem, router and 802.11n access point, and the BT Home Hub 5 which combines a VDSL modem, router and 802.11ac access point. These combined devices will now be referred to as Hubs.

Due to the regulation of radio spectrum across the World, Wi-Fi only operates within the 2.4GHz and 5GHz spectrum Industrial, Scientific and Medical (ISM) bands. Being an air interface, the performance of Wi-Fi is susceptible to external influence. There are a number of factors which can influence the performance of the link between a wireless device and the wireless access point part of a hub:
- Relative Location: The quality of the signal link deteriorates as the distance between the devices increases;
- Obstructions: The presence of objects in the path between the device and the access point also deteriorate the signal link. The composition of the object also has an effect. Metals reflect the radio waves while brick and concrete absorb the radio waves;
- Shared channel: The number of channels available for transmission is limited. In 2.4GHz Wi-Fi there are typically only 13 channels and of those only 3 are non-overlapping. Therefore access points typically choose to broadcast on channels 1, 6 and 11. Where two or more access points have their wireless networks on the same channel, in accordance with the CSMA-CA protocol, if a device is transmitting, no other device can transmit. Any device wishing to transmit must wait for the currently transmitting device to finish before it attempts to gain the channel. If a device is waiting a long period of time to transmit due to heavy channel usage, performance suffers. Therefore in areas with a dense population of Wi-Fi access points is present, the system performance will deteriorate;
- Adjacent channel: The RF channels used in Wi-Fi are not sufficiently spaced so that adjacent channels are completely isolated from each other. The energy of transmissions in a particular channel is also present in the adjacent 3 channels on either side of the channel. Therefore to avoid cross talk it is recommended to use channels 1, 6 and 11 to provide sufficient isolation. However, a device on a particular channel wishing to transmit, may be prevented from doing so due to interference from the overlapping channel. Similarly when the device is transmitting, it will interfere with devices receiving on adjacent channels. Therefore this behaviour results in congestion;
- Other wireless protocols: The radio frequencies used by Wi-Fi devices, especially the 2.4GHz bands, are not exclusively used by Wi-Fi. Other wireless protocol devices such as Bluetooth and wireless microphones also operate in these bands. These devices can cause disruption to multiple Wi-Fi devices in the form of interference since they do not comply with the CSMA-CA protocols; and
- Out of band - Just as the energy from an adjacent Wi-Fi channel transmission can leak into a neighbouring channel, devices operating in a different but adjacent part of the radio frequency spectrum can cause interference. Examples are LTE transmissions in the 2.6GHz spectrum.

There are therefore two main physical links in the communication path between a user device and the ISP equipment which can affect the user's quality of experience with the ISP. Namely, the DSL link from the DSLAM to the customer modem, and the Wi-Fi link between the user's devices and the access point.

A bottleneck at either location will negatively affect the user's experience. However, typically, when a user experiences poor performance, the assumption is that the DSL link is the problem and a complaint is made to the ISP or access provider.

While the DSL link is also susceptible to performance problems and interference, those are beyond the scope of this invention.

In addition to issues affecting the link performance, the large number of equipment vendors can result in differences in the implementation of the WiFi protocols. This variation can cause problems between particular combinations of user devices and access points resulting in poor performance even when there are no other problems affecting the DSL link or WiFi air interface environment.

The present invention addresses the above device compatibility problem.

US2013/0294263 describes monitoring wireless terminal behaviour in a wireless communications network, where each wireless terminal has a defined terminal type. Data describing the behaviour of a plurality of wireless terminals in the wireless communications network is obtained. Based on the obtained data, an aggregated severity score for a given terminal type is determined that is indicative of the extent to which one or more of a plurality of performance criteria has not been met by wireless terminals of the given type. If the aggregated severity score for the given terminal type exceeds a corresponding severity score threshold, one or more of a plurality of predefined actions are performed based on the extent to which the threshold is exceeded.

US2007/0105544 describes a technique for determining the performance of a mobile terminal within a communications network. Data within messages associated with one or more user transactions and messages associated with mobile terminal type information are correlated. Variable performance indicators may then be derived by mobile terminal type information from the correlated data.

US2013/0157688 relates to a system for maintaining or optimising a mobile phone network by spatially correlating geolocated radio access network (RAN) performance measurement data and geolocated subscriber account data which provides additional technical information on RAN performance. These data are integrated in a spatial data structure and provided with a spatial querying and data correlation system for identifying, and addressing problem areas of the RAN.

US8392712 describes a method for controlling access to a network by determining one or more device characteristics of an electronic device seeking to join the network. Then, one or more unique device credentials are generated for the electronic device. The format of the unique device credentials are based on the one or more device characteristics of the electronic device.

US 2011/096678 discloses monitoring service quality in WLAN networks, wherein the monitoring comprises monitoring used network devices and end user device types, and collecting compatibility information concerning different devices of the network.

### Statements of invention.

The invention is defined by a method according to Claim 1, an apparatus according to Claim 4 and a computer program product according to Claim 7.

Further embodiments are defined by the dependent claims.

### Figures

Embodiments of the present invention will now be described with the aid of the accompanying Figures in which:
Figure 1 shows the main components of a network in accordance with the first embodiment of the invention;
Figure 2A shows a scenario in which problems on a DSL line on data sessions also affect the wireless link between a device and a hub;
Figure 2B shows a scenario in which the wireless network is affected by interference;
Figure 2C shows a scenario in which a particular wireless link between a wireless device and the hub is affected by interference;
Figure 2D shows a scenario in which a device interoperability issue is causing poor performance in the wireless link;
Figure 3 shows the components of a hub in the first embodiment;
Figure 4 shows the functional components of the hub in the first embodiment;
Figure 5 shows the components of a routing function within the hub;
Figure 6 shows the components of a hub flow analyser within the hub;
Figure 7 shows the components of the management server in the first embodiment; and
Figure 8 shows the functional components of a flow analyser the management server in the first embodiment.

### Description

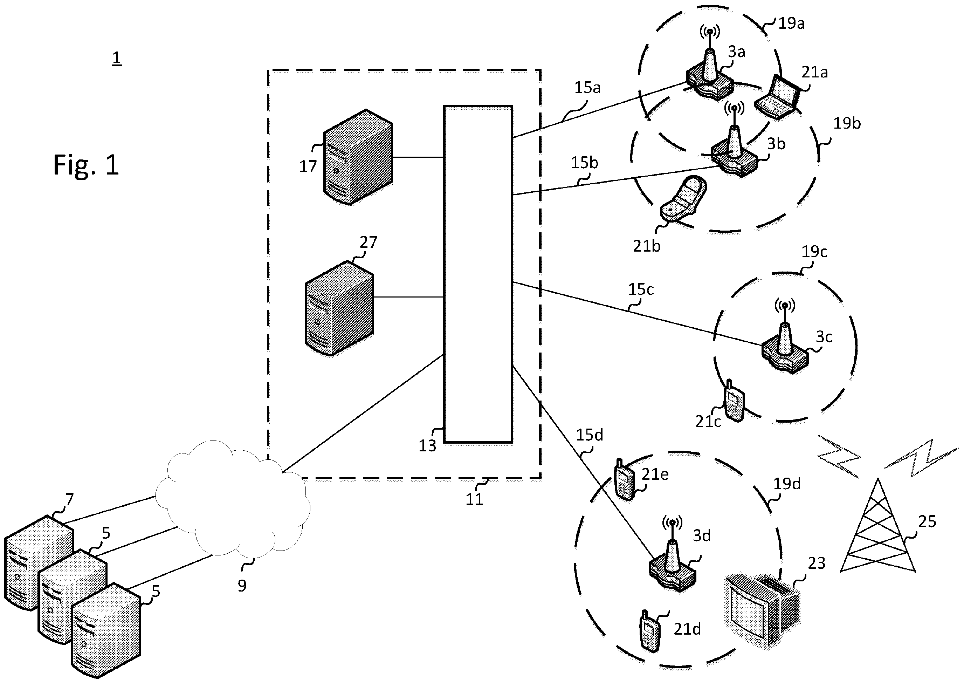

Figure 1 shows the main components of a network 1 according to a first embodiment. In this system, a number of hubs 3 are shown located at a number of customer premises. Each hub 3 contains modem, routing and wireless access point functionality. The modem component converts DSL signalling into Ethernet, the routing directs the flow of Ethernet packets to the different network interfaces and the wireless access point components converts the Ethernet data into a format suitable for transmission over the air interface. An example of a hub device 3 is the BT Home Hub 5 having a VDSL modem and 802.11ac wireless interface.

Each hub 3 is connected to application servers 5 and web servers 7 located on a wide area network such as the Internet 9, via the ISP's network core 11. In order to access the network core 11, edge routers 13 such as DSLAMs and mini DSLAMs are connected to the hubs via a DSL copper or fibre line 15. A user profile server 17 stores information relating to each customer and the line 15 properties.

As is conventional for wireless access point devices, the hubs 3 each generate a wireless network 19 (WLAN) and devices 21 such as laptops, smartphones and tablets within communication range of the wireless signal, and having the authentication credentials, can connect to the hub 3 to send and receive data sessions in accordance with the IEEE 802.11 family of Wi-Fi protocols.

Therefore in the above network configuration, for any communication session between a user device 21 and an application server 5 or web server 7, data packets generated at the user device 21 must traverse several physical layer transmission mediums before reaching the remote device, application server 5 or web server 7. Namely:
1. Device 21 to hub 3 - data is transmitted over the air medium in accordance with the IEEE 802.11 Wi-Fi protocols;
2. Hub 3 to ISP core 11 -with the aid of a suitable modem, data is transmitted using a DSL protocol over copper lines 15;
3. Copper to optical link - used from the DSLAM/mini DSLAM to other network core components and communication paths for general routing towards the destination. Electrical signals will be converted to optical signals within backhaul and core network components.

The 802.11ac protocol allows a maximum speed of 1300Mbps between devices, 802.11n allows a maximum speed of 600Mbps and 802.11g allows a maximum speed of 54Mbps. However, in all three variants, the maximum speed is rarely achieved due to the number of issues affecting Wi-Fi. As explained above, poor performance of the Wi-Fi link can be caused by various forms of contention and interference affecting the spectrum used by Wi-Fi. Examples are other neighbouring Wi-Fi devices and access points on the same channel, access points on an overlapping channel, Bluetooth, and wireless microphones. In addition, interference from devices such as microwave ovens, some cellular devices such as 2.6GHz Long Term Evolution (LTE) devices and electrical storms can disrupt Wi-Fi.

DSL speeds are generally slower than Wi-Fi speeds and are dependent on the particular type of DSL used in the link between the customer premises and the ISP equipment. The maximum theoretical speeds are 8Mbps for ADSL 1, 24Mbps for ADSL 2+, 160Mbps for VDSL FTTC, 330Mbps for FTTC (according to typical current implementations of these technologies in the UK). Factors that affect the performance of the DSL link include length of the line, crosstalk between lines, electrical faults at the mini DSLAM within the power grid and accidental damage to the lines due to cable works.

Due to the large differences in maximum speed between Wi-Fi and DSL links, generally any loss in performance is blamed on the DSL link and a complaint is made to the ISP. However the likelihood of the problem actually occurring in the Wi-Fi part of the communication link is significant.

Examples of the different problematic scenarios are shown in Figure 1.
1. Contention in a shared channel. In this case, the DSL connection from hub 3a to the DSLAM 13 is functioning correctly over line 15a and the DSL connection from hub 3b to the DSLAM 13 is also functioning correctly over line 15b.
   a. Hub 3a and hub 3b are in close proximity and therefore their wireless networks 21a and 21b respectively overlap in geographical range. A phone 21b is connected to network 21b in the non-overlapping range but may suffer slightly deteriorated performance due to the hub 3b being unable to respond to requests due to lockout by the CSMA-SA transmission scheme.
   b. A laptop 21a is shown in the overlapping range between the wireless networks 19a and 19b and therefore its connection to hub 21a will be affected by the signal from hub 21b and the need to wait before transmitting in accordance with CSMA-CA.
2. Poor DSL line. In this case, there are no issues with the hub 3c or the wireless network 19c connection to a mobile device 21c. However, the DSL link 15c is suffering due to a line fault.
3. Interference - In this case there are no problems with the DSL line 15d and there are no Wi-Fi related problems in the wireless network 19d to the phone 21d. However, a microwave oven 23 is generating interference which affects the network.

Most of the causes of interference are short range sources, however, a LTE radio transmitter 25 is also shown which can be a source of wide area interference affecting multiple wireless networks.

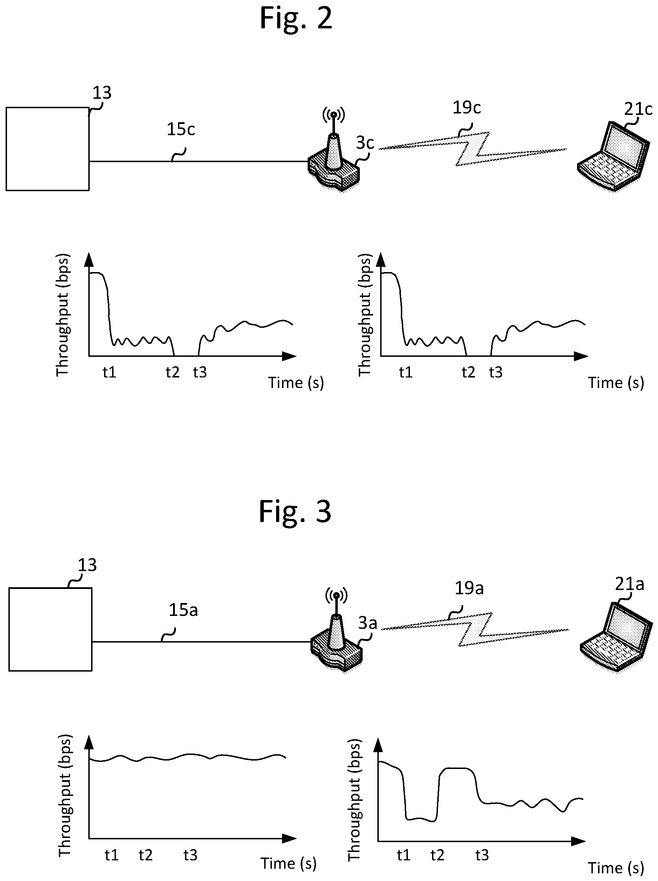

Figures 2 to 5 show the different network performance characteristics that can be observed when a device is communicating with a remote application server and a fault occurs on each of the communication links.

As shown in Figure 2, when a fault occurs on the DSL line 15c such as a disconnection or a drop in throughput, the performance of the Wi-Fi network 19c link matches this degradation since the flow of data is restricted between the user device 21c and the application server 5 via the DSL connection 15c. Furthermore, this fault can be detected at the ISP since the modem will synchronise with the DSLAM at a new rate which will be logged and stored at the DSLAM.

In a case where there is a fault in the DSL connection, this fault can be detected by the ISP and taken into account when estimating the speed of service a customer can expect to receive. For example, although the maximum theoretical speed of ADSL2+ is 24Mbps, the ISP can factor in conditions that may be affecting the user's DSL line to estimate the likely speed to be 15Mbps.

However, a more difficult situation for the ISP to resolve is where the customer has paid for a level of service, for example the ADSL2+ product with an estimate of 15Mbps but then finds that their connection to certain services is poor, or where they carry out a speed test and find that the calculated speed between their device and the remote speed test service is significantly below this estimated speed.

In this case, the poor performance may be due to the customer's network setup and more specifically the user's Wi-Fi environment. However, generally the ISP has no visibility of the customer's setup.

Figure 3 shows the throughput of a data session between a user device 21a and a remote server 5 over time in a case where the Wi-Fi 19a link deteriorates while the DSL link 15a remains stable. As can be seen, initially the performance of the Wi-Fi network 19a is sufficient to saturate the DSL link 15a so that the DSL link 15a is the bottleneck. However, after time t1 the throughput of the Wi-Fi network 19a drops, perhaps due to contention or interference, but this does not affect the DSL link 15a. At time t2 the cause of performance degradation is removed and as the Wi-Fi network 19a performance increases, until the DSL link 15a is again the bottleneck. In this example, at time t3, the Wi-Fi network 19a performance drops and remains low. If the performance loss is sustained, the customer would typically call to complain to the ISP.

In this case, the performance of the Wi-Fi network 19a is affecting the customer's data sessions.

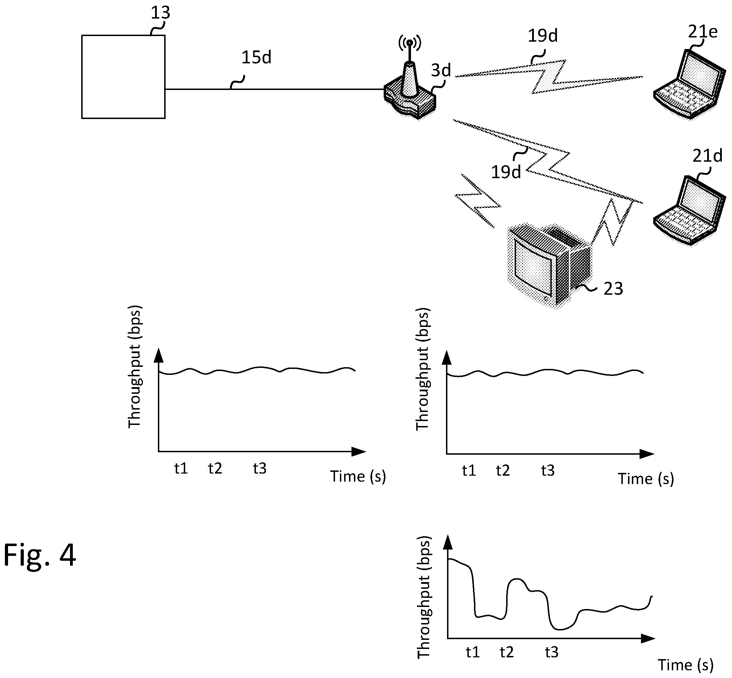

Figure 4 shows a case where a local source of interference 23 is affecting one of the devices 21d located on a Wi-Fi network 19d but other Wi-Fi devices 21e are not affected. In this case, the throughput of device 21e remains constant while the throughput of device 21d falls dramatically in the presence of interference 23 before returning to the previous speed. The DSL line 15d speed does not change.

In Figures 3 and 4, degradation of the wireless network 19a, 19d link between at least one device 21a, 21b, 21c and 21d and the wireless access point part of the hub 3a, 3d caused a user's data sessions to be negatively affected while the DSL link 15a, 15d did not change.

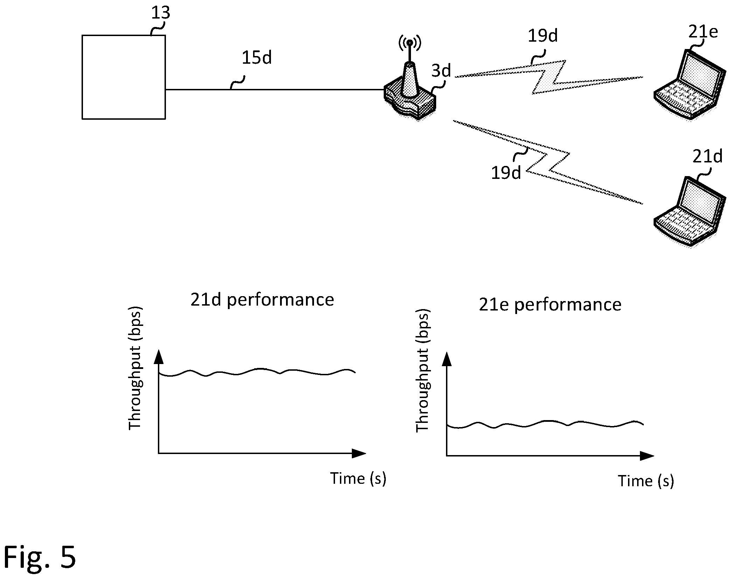

Figure 5 shows another case where devices 21d and 21e are both WiFi 802.11n compliant devices carrying out the same network transfer with the wireless access point 3d. However, even though there are no problems with the WiFi air interface, the network performance of device 21d is significantly lower than that of device 21e. This is an indication of a device compatibility problem.

In a conventional network setup, the ISP has no visibility of the above scenarios. Therefore in the first embodiment, the hub is arranged to try to identify these situations. Furthermore, a Wi-Fi management server 27, located in the ISP network core 11, is provided to configure the hubs 3 in the customer premises and perform further analysis on the information collected by each hub 3.

The hub 3 and management server 27 of the first embodiment will now be described in more detail.

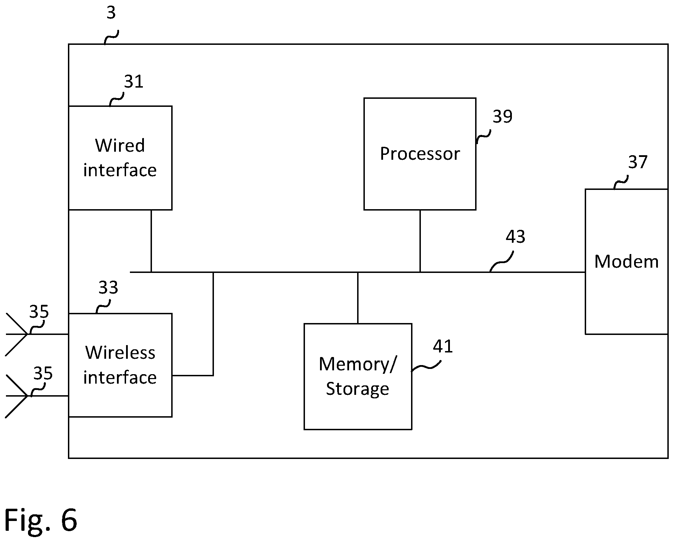

Figure 6 shows the main components of the hub 3 according to the first embodiment. For home network connections, the hub 3 has a wired network interface 31 and a wireless networking interface 33, in this case four gigabit Ethernet ports and an IEEE 802.11ac Wi-Fi adaptor and antenna array 35. For connections to remote networks, the hub 3 has a wide area network interface 37 in the case of the BT home hub 5, a VDSL2 modem to connect to the ISP network core 11 over a copper 15 and fibre optic line in accordance with FTTC/FTTP DSL.

A central processor 39 controls the flow of packets from and to the various ports via a storage medium 41 which includes random access memory (RAM), Read Only Memory (ROM) and processor buffers. The various components are communicatively connected via a common data bus 43.

The central processor 39 manages the hub 3 in accordance with program instructions stored on the storage medium.

When the central processor 39 is executing the program instructions the hub 3 can be regarded as a number of functional component blocks as will be described in the next section.

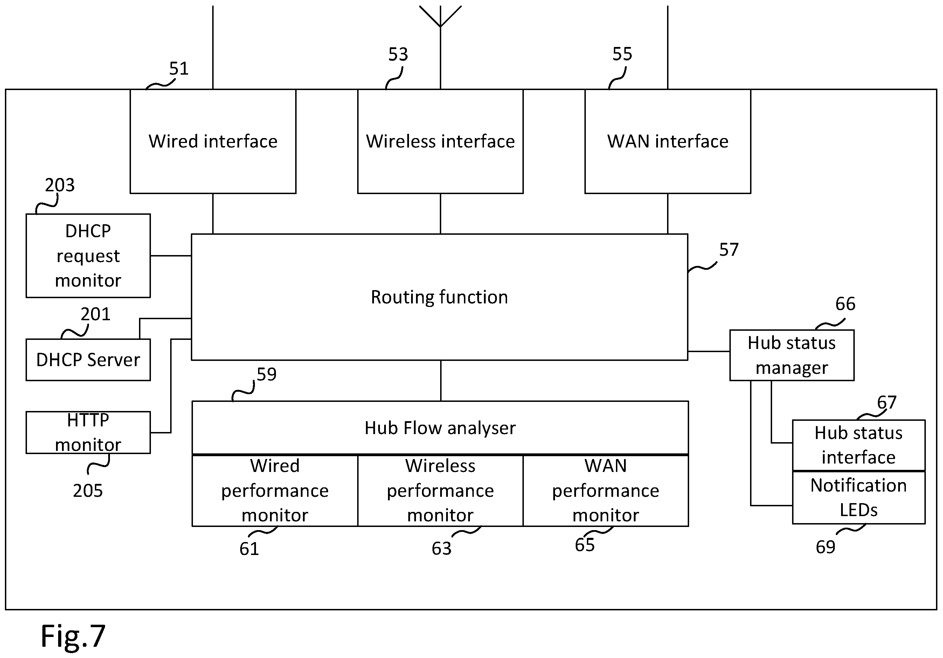

Figure 7 shows the functional components of a hub 3 in the first embodiment.

For external connectivity, the hub contains a wired LAN interface 51, a wireless network interface 53 and a wide area network interface 55 for connecting to the respective wired, wireless and remote devices

As will be described in more detail later, a routing function 57 handles the routing of packets between the different interfaces 51, 53, 55 in accordance with the packet destination. The typical routing paths to the Internet are:
Wireless to WAN;
WAN to Wireless;
Ethernet to WAN; and
WAN to Ethernet.

There are also home network communication paths:
Wireless to Wireless - communication between two wireless home network devices 21;
Ethernet to Ethernet - communication between two wired home network devices;
Wireless to Ethernet - communication from a wireless home network device 21 to a wired home network device; and
Ethernet to Wireless - communication from a wired home network device to a wireless home network device 21.

Furthermore, for administrative activities, devices on any of the network interfaces 51, 53, 55 may communicate with the hub itself. Therefore three further paths are:
Wireless to Hub 3;
Ethernet to hub 3; and
WAN interface to hub 3.

To identify Wi-Fi problems, in this embodiment, the routing function 57 is configured to look at data traffic flowing over the wireless interface 53 while generally ignoring traffic which is flowing only between the other interfaces 51, 53.

As will be described in more detail below, the hub 3 includes a hub flow analyser 59 for analysing data packets in terms of IP Flows flowing through the wireless network interface 53. The routing function 57 is configured to replicate wireless network packets which are received from the wireless interface 53 or being sent to the wireless interface 51 to the hub flow analyser 59 and the hub flow analyser 59 identifies potentially problematic flows for further analysis by the wireless management server 27.

Additionally, the hub 3 contains a wired LAN performance monitor 61, a Wi-Fi performance monitor 63 and a WAN performance monitor 65 to collect performance metrics relating to each of the interfaces 51, 53, 55. This information is used by the hub flow analyser 59 in processing the flow records.

The hub 3 also contains a hub status manager 66 for receiving information about the status of the wireless network from the hub flow Analyser 59 in accordance with instructions from the management server 27. To communicate any determination of interference on the wireless network, the hub contains a user interface 67 for users to access status information about the hub, including any information relating to any detected Wi-Fi interference and the hub 3 includes notification lights 69 for providing visual indications to the user that problems affecting the performance of the wireless network have been detected.

In this embodiment, in order to detect possible device incompatibilities, the hub 3 also contains a DHCP request monitor 201 and an HTTP request monitor 203 for passively gathering identity information about the devices which are connected to the hub 3. This avoids having to ask the user to enter identity details of their devices 21.

When devices 21 connect to a hub 3 over WiFi, after the standard steps of association and authentication to the hub 3, the device 21 will make a DHCP request to the hub 3 in order to obtain a valid IP address for use on the network of the hub 3. In this embodiment, the specific manner in which the DHCP request commands are issued by the device (in particular the order of the parameter request list items in Option 55) can be used to identify device properties such as the client type and OS, and therefore the routing function 57 is configured to send the DHCP requests to a DHCP server 201, and also configured to copy the client device's 21 DHCP request to the DHCP monitor 203. The DHCP monitor 203 is arranged to store details of the received DHCP exchanges and to periodically send the requests to the management server 27 for further analysis.

Two examples of device (shortened) DHCP requests are shown below. The first is from a Linux laptop and the second example is from a smartphone such as the Samsung Galaxy S4™.

In both cases, frame 1 relates to a DHCP Discover message, frame 2 is a DHCP Offer, frame 3 is a DHCP request and frame 4 is a DHCP ACK

| No. | Time Source | Destination | Protocol SSID | Info | SSI (dBm) |
|---|---|---|---|---|---|
| 10 | 0.0.0.0 | 255.255.255.255 | DHCP | DHCP Discover - Transaction ID 0x3832305a | |

| **Frame 1:** | | | | | |
|---|---|---|---|---|---|
| Magic cookie: DHCP | | | | | |
| Option: (53) DHCP Message Type Length: 1 DHCP: Discover (1) | | | | | |
| Option: (12) Host Name Length: 16 Host Name: developer-laptop | | | | | |
| Option: (55) Parameter Request List | | | | | |
| Length: 17 | | | | | |
| Parameter Request List Item: (1) Subnet Mask | | | | | |
| Parameter Request List Item: (28) Broadcast Address | | | | | |
| Parameter Request List Item: (2) Time Offset | | | | | |
| Parameter Request List Item: (3) Router | | | | | |
| Parameter Request List Item: (15) Domain Name | | | | | |
| Parameter Request List Item: (6) Domain Name Server | | | | | |
| Parameter Request List Item: (119) Domain Search | | | | | |
| Parameter Request List Item: (12) Host Name | | | | | |
| Parameter Request List Item: (44) NetBIOS overTCP/IP Name Server | | | | | |
| Parameter Request List Item: (47) NetBIOS overTCP/IP Scope | | | | | |
| Parameter Request List Item: (26) Interface MTU | | | | | |
| Parameter Request List Item: (121) Classless Static Route | | | | | |
| Parameter Request List Item: (42) Network Time Protocol Servers | | | | | |
| Parameter Request List Item: (121) Classless Static Route | | | | | |
| Parameter Request List Item: (249) Private/Classless Static Route (Microsoft) | | | | | |
| Parameter Request List Item: (252) Private/Proxy autodiscovery | | | | | |
| Parameter Request List Item: (42) Network Time Protocol Servers | | | | | |
| Option: (255) End | | | | | |
| Option End: 255 | | | | | |
| Padding | | | | | |

| No. | Time Source | Destination | Protocol SSID | Info | SSI (dBm) |
|---|---|---|---|---|---|
| 22 | 192.168.3.1 | 192.168.3.116 | DHCP | DHCP Offer - Transaction ID 0x3832305a | |

| **Frame 2:** | | | | | |
|---|---|---|---|---|---|
| Message type: Boot Reply (2) | | | | | |
| Magic cookie: DHCP | | | | | |
| Option: (53) DHCP Message Type Length: 1 DHCP: Offer (2) | | | | | |
| Option: (54) DHCP Server Identifier Length: 4 DHCP Server Identifier: 192.168.3.1 (192.168.3.1) | | | | | |
| Option: (51) IP Address Lease Time Length: 4 IP Address Lease Time: (86400s) 1 day | | | | | |
| Option: (58) Renewal Time Value Length: 4 Renewal Time Value: (43200s) 12 hours | | | | | |
| Option: (59) Rebinding Time Value Length: 4 Rebinding Time Value: (75600s) 21 hours | | | | | |
| Option: (1) Subnet Mask Length: 4 Subnet Mask: 255.255.255.0 (255.255.255.0) | | | | | |
| Option: (28) Broadcast Address Length: 4 Broadcast Address: 192.168.3.255 (192.168.3.255) | | | | | |
| Option: (6) Domain Name Server Length: 4 Domain Name Server: 192.168.3.1 (192.168.3.1) | | | | | |
| Option: (3) Router Length: 4 Router: 192.168.3.1 (192.168.3.1) | | | | | |
| Option: (255) End Option End: 255 | | | | | |
| Padding | | | | | |

| No. | Time Source | Destination | Protocol SSID | Info | SSI (dBm) |
|---|---|---|---|---|---|
| 32 | 0.0.0.0 | 255.255.255.255 | DHCP | DHCP Request - Transaction ID 0x3832305a | |

| **Frame 3:** | | | | | |
|---|---|---|---|---|---|
| Bootstrap Protocol | | | | | |
| Message type: Boot Request (1) | | | | | |
| Magic cookie: DHCP | | | | | |
| Option: (53) DHCP Message Type Length: 1 DHCP: Request (3) | | | | | |
| Option: (54) DHCP Server Identifier Length: 4 DHCP Server Identifier: 192.168.3.1 (192.168.3.1) | | | | | |
| Option: (50) Requested IP Address Length: 4 Requested IP Address: 192.168.3.116 (192.168.3.116) | | | | | |
| Option: (12) Host Name Length: 16 Host Name: developer-laptop | | | | | |
| Option: (55) Parameter Request List | | | | | |
| Length: 17 | | | | | |
| Parameter Request List Item: (1) Subnet Mask | | | | | |
| Parameter Request List Item: (28) Broadcast Address | | | | | |
| Parameter Request List Item: (2) Time Offset | | | | | |
| Parameter Request List Item: (3) Router | | | | | |
| Parameter Request List Item: (15) Domain Name | | | | | |
| Parameter Request List Item: (6) Domain Name Server | | | | | |
| Parameter Request List Item: (119) Domain Search | | | | | |
| Parameter Request List Item: (12) Host Name | | | | | |
| Parameter Request List Item: (44) NetBIOS overTCP/IP Name Server | | | | | |
| Parameter Request List Item: (47) NetBIOS overTCP/IP Scope | | | | | |
| Parameter Request List Item: (26) Interface MTU | | | | | |
| Parameter Request List Item: (121) Classless Static Route | | | | | |
| Parameter Request List Item: (42) Network Time Protocol Servers | | | | | |
| Parameter Request List Item: (121) Classless Static Route | | | | | |
| Parameter Request List Item: (249) Private/Classless Static Route (Microsoft) | | | | | |
| Parameter Request List Item: (252) Private/Proxy autodiscovery | | | | | |
| Parameter Request List Item: (42) Network Time Protocol Servers | | | | | |
| Option: (255) End | | | | | |
| Option End: 255 | | | | | |
| Padding | | | | | |

| No. | Time Source | Destination | Protocol SSID | Info | SSI (dBm) |
|---|---|---|---|---|---|
| 42 | 192.168.3.1 | 192.168.3.116 | DHCP | DHCP ACK - Transaction ID 0x3832305a | |

| **Frame 4:** | | | | | |
|---|---|---|---|---|---|
| Bootstrap Protocol | | | | | |
| Message type: Boot Reply (2) | | | | | |
| Magic cookie: DHCP | | | | | |
| Option: (53) DHCP Message Type Length: 1 DHCP: ACK (5) | | | | | |
| Option: (54) DHCP Server Identifier Length: 4 DHCP Server Identifier: 192.168.3.1 (192.168.3.1) | | | | | |
| Option: (51) IP Address Lease Time Length: 4 IP Address Lease Time: (86400s) 1 day | | | | | |
| Option: (58) Renewal Time Value Length: 4 Renewal Time Value: (43200s) 12 hours | | | | | |
| Option: (59) Rebinding Time Value Length: 4 Rebinding Time Value: (75600s) 21 hours | | | | | |
| Option: (1) Subnet Mask Length: 4 Subnet Mask: 255.255.255.0 (255.255.255.0) | | | | | |
| Option: (28) Broadcast Address Length: 4 Broadcast Address: 192.168.3.255 (192.168.3.255) | | | | | |
| Option: (6) Domain Name Server Length: 4 Domain Name Server: 192.168.3.1 (192.168.3.1) | | | | | |
| Option: (12) Host Name Length: 16 Host Name: developer-laptop | | | | | |
| Option: (3) Router Length: 4 Router: 192.168.3.1 (192.168.3.1) | | | | | |
| Option: (255) End | | | | | |
| Option End: 255 | | | | | |

Second DHCP request from a mobile device

| No. | Time Source | Destination | Protocol SSID | Info | SSI (dBm) |
|---|---|---|---|---|---|
| 10 | 0.0.0.0 | 255.255.255.255 | DHCP | DHCP Discover - Transaction ID 0xc998e306 | |

| **Frame 1:** | | | | | |
|---|---|---|---|---|---|
| Bootstrap Protocol | | | | | |
| Message type: Boot Request (1) | | | | | |
| Magic cookie: DHCP | | | | | |
| Option: (53) DHCP Message Type Length: 1 DHCP: Discover (1) | | | | | |
| Option: (61) Client identifier Length: 7 Hardware type: Ethernet (0x01) | | | | | |
| Client MAC address: SamsungE_4b:b8:5b (40:0e:85:4b:b8:5b) | | | | | |
| Option: (57) Maximum DHCP Message Size Length: 2 Maximum DHCP Message Size: 1500 | | | | | |
| Option: (60) Vendor class identifier Length: 12 Vendor class identifier: dhcpcd-5.5.6 | | | | | |
| Option: (12) Host Name Length: 24 Host Name: android-4cd4a135d7b3364d | | | | | |
| Option: (55) Parameter Request List | | | | | |
| Length: 10 | | | | | |
| Parameter Request List Item: (1) Subnet Mask | | | | | |
| Parameter Request List Item: (33) Static Route | | | | | |
| Parameter Request List Item: (3) Router | | | | | |
| Parameter Request List Item: (6) Domain Name Server | | | | | |
| Parameter Request List Item: (15) Domain Name | | | | | |
| Parameter Request List Item: (26) Interface MTU | | | | | |
| Parameter Request List Item: (28) Broadcast Address | | | | | |
| Parameter Request List Item: (51) IP Address Lease Time | | | | | |
| Parameter Request List Item: (58) Renewal Time Value | | | | | |
| Parameter Request List Item: (59) Rebinding Time Value | | | | | |
| Option: (255) End | | | | | |
| Option End: 255 | | | | | |

| No. | Time Source | Destination | Protocol SSID | Info | SSI (dBm) |
|---|---|---|---|---|---|
| 20 | 192.168.3.1 | 192.168.3.123 | DHCP | DHCP Offer - Transaction ID 0xc998e306 | |

| **Frame 2:** | | | | | |
|---|---|---|---|---|---|
| Bootstrap Protocol | | | | | |
| Message type: Boot Reply (2) | | | | | |
| Magic cookie: DHCP | | | | | |
| Option: (53) DHCP Message Type Length: 1 DHCP: Offer (2) | | | | | |
| Option: (54) DHCP Server Identifier Length: 4 DHCP Server Identifier: 192.168.3.1 (192.168.3.1) | | | | | |
| Option: (51) IP Address Lease Time Length: 4 IP Address Lease Time: (86400s) 1 day | | | | | |
| Option: (58) Renewal Time Value Length: 4 Renewal Time Value: (43200s) 12 hours | | | | | |
| Option: (59) Rebinding Time Value Length: 4 Rebinding Time Value: (75600s) 21 hours | | | | | |
| Option: (1) Subnet Mask Length: 4 Subnet Mask: 255.255.255.0 (255.255.255.0) | | | | | |
| Option: (28) Broadcast Address Length: 4 Broadcast Address: 192.168.3.255 (192.168.3.255) | | | | | |
| Option: (6) Domain Name Server Length: 4 Domain Name Server: 192.168.3.1 (192.168.3.1) | | | | | |
| Option: (3) Router Length: 4 Router: 192.168.3.1 (192.168.3.1) | | | | | |
| Option: (255) End | | | | | |
| Option End: 255 | | | | | |
| Padding | | | | | |

| No. | Time Source | Destination | Protocol SSID | Info | SSI (dBm) |
|---|---|---|---|---|---|
| 30 | 0.0.0.0 | 255.255.255.255 | DHCP | DHCP Request - Transaction ID 0xc998e306 | |

| **Frame 3:** | | | | | |
|---|---|---|---|---|---|
| Bootstrap Protocol | | | | | |
| Message type: Boot Request (1) | | | | | |
| Magic cookie: DHCP | | | | | |
| Option: (53) DHCP Message Type Length: 1 DHCP: Request (3) | | | | | |
| Option: (61) Client identifier Length: 7 Hardware type: Ethernet (0x01) | | | | | |
| Client MAC address: SamsungE_4b:b8:5b (40:0e:85:4b:b8:5b) | | | | | |
| Option: (50) Requested IP Address Length: 4 Requested IP Address: 192.168.3.123 (192.168.3.123) | | | | | |
| Option: (54) DHCP Server Identifier Length: 4 DHCP Server Identifier: 192.168.3.1 (192.168.3.1) | | | | | |
| Option: (57) Maximum DHCP Message Size Length: 2 Maximum DHCP Message Size: 1500 | | | | | |
| Option: (60) Vendor class identifier Length: 12 Vendor class identifier: dhcpcd-5.5.6 | | | | | |
| Option: (12) Host Name Length: 24 Host Name: android-4cd4a135d7b3364d | | | | | |
| Option: (55) Parameter Request List | | | | | |
| Length: 10 | | | | | |
| Parameter Request List Item: (1) Subnet Mask | | | | | |
| Parameter Request List Item: (33) Static Route | | | | | |
| Parameter Request List Item: (3) Router | | | | | |
| Parameter Request List Item: (6) Domain Name Server | | | | | |
| Parameter Request List Item: (15) Domain Name | | | | | |
| Parameter Request List Item: (26) Interface MTU | | | | | |
| Parameter Request List Item: (28) Broadcast Address | | | | | |
| Parameter Request List Item: (51) IP Address Lease Time | | | | | |
| Parameter Request List Item: (58) Renewal Time Value | | | | | |
| Parameter Request List Item: (59) Rebinding Time Value | | | | | |
| Option: (255) End | | | | | |
| Option End: 255 | | | | | |

| No. | Time Source | Destination | Protocol SSID | Info | SSI (dBm) |
|---|---|---|---|---|---|
| 40 | 192.168.3.1 | 192.168.3.123 | DHCP | DHCP ACK - Transaction ID 0xc998e306 | |

| **Frame 4:** | | | | | |
|---|---|---|---|---|---|
| Bootstrap Protocol | | | | | |
| Message type: Boot Reply (2) | | | | | |
| Magic cookie: DHCP | | | | | |
| Option: (53) DHCP Message Type Length: 1 DHCP: ACK (5) | | | | | |
| Option: (54) DHCP Server Identifier Length: 4 DHCP Server Identifier: 192.168.3.1 (192.168.3.1) | | | | | |
| Option: (51) IP Address Lease Time Length: 4 IP Address Lease Time: (86400s) 1 day | | | | | |
| Option: (58) Renewal Time Value Length: 4 Renewal Time Value: (43200s) 12 hours | | | | | |
| Option: (59) Rebinding Time Value Length: 4 Rebinding Time Value: (75600s) 21 hours | | | | | |
| Option: (1) Subnet Mask Length: 4 Subnet Mask: 255.255.255.0 (255.255.255.0) | | | | | |
| Option: (28) Broadcast Address Length: 4 Broadcast Address: 192.168.3.255 (192.168.3.255) | | | | | |
| Option: (6) Domain Name Server Length: 4 Domain Name Server: 192.168.3.1 (192.168.3.1) | | | | | |
| Option: (3) Router Length: 4 Router: 192.168.3.1 (192.168.3.1) | | | | | |
| Option: (255) End | | | | | |
| Option End: 255 | | | | | |
| Padding | | | | | |

Another method of passively gathering device identity information is to analyse HTTP requests. HTTP requests issued by devices 21 when browsing webpages often contain device and software version information as part of the HTTP request. In particular, the User Agent String located within the HTTP request header contains device information which can be used by servers to tailor served webpages to properties and characteristics of the requesting device. Therefore in this embodiment, the routing function 57 is arranged to identify HTTP requests from connected user devices 21 and to copy the requests to the HTTP request monitor 205.

The HTTP request monitor 205 contains a list of previously extracted UASs from each client and therefore upon receiving an HTTP request, the HTTP request monitor 205 extracts the User Agent String (UAS) from the HTTP request header and compares the extracted UAS against the stored UASs. If the received UAS is a new UAS for that device 21, then new information is present and so the HTTP request monitor 205 adds the UAS to the list of UASs stored for that connected device 21 and periodically sends the stored list, sorted by each observed device's MAC address to the management server 27.

Example HTTP Request:

| No. | Time | Source | Destination | Protocol Info | |
|---|---|---|---|---|---|
| 128 | 12.519790 | 192.168.3.116 | 91.189.89.240 | HTTP | GET/12.04/Google/?sourceid=hp HTTP/1.1 |

| Frame 128: | | | | | |
|---|---|---|---|---|---|
| Hypertext Transfer Protocol | | | | | |
| GET/12.04/Google/?sourceid=hp HTTP/1.1\r\n | | | | | |
| [Expert Info (Chat/Sequence): GET/12.04/Google/?sourceid=hp HTTP/1.1\r\n] | | | | | |
| [Message: GET/12.04/Google/?sourceid=hp HTTP/1.1\r\n] | | | | | |
| [Severity level: Chat] | | | | | |
| [Group: Sequence] | | | | | |
| Request Method: GET | | | | | |
| Request URI: /12.04/Google/?sourceid=hp | | | | | |
| Request Version: HTTP/1.1 | | | | | |
| Host: start.ubuntu.com\r\n | | | | | |
| User-Agent: **Mozilla/5.0 (X11; Ubuntu; Linux i686; rv:30.0) Gecko/20100101 Firefox/30.0\r\n** | | | | | |
| Accept: text/html,application/xhtml+xml,application/xml;q=0.9,*/*;q=0.8\r\n | | | | | |
| Accept-Language: en-US,en;q=0.5\r\n | | | | | |
| Accept-Encoding: gzip, deflate\r\n | | | | | |
| Connection: keep-alive\r\n | | | | | |
| \r\n | | | | | |

Example User Agent String:

| |
|---|
| User-Agent: Mozilla/5.0 (X11; Ubuntu; Linux i686; rv:30.0) Gecko/20100101 Firefox/30.0\r\n |

The routing function 57 is also configured to send information regarding the hub 3 properties such as the hardware type and software version to the management server 27 when the hub is initialised and connects to the management server 27. With the above processing, each hub continuously sends identity data relating to its connected devices to the management server.

### Routing

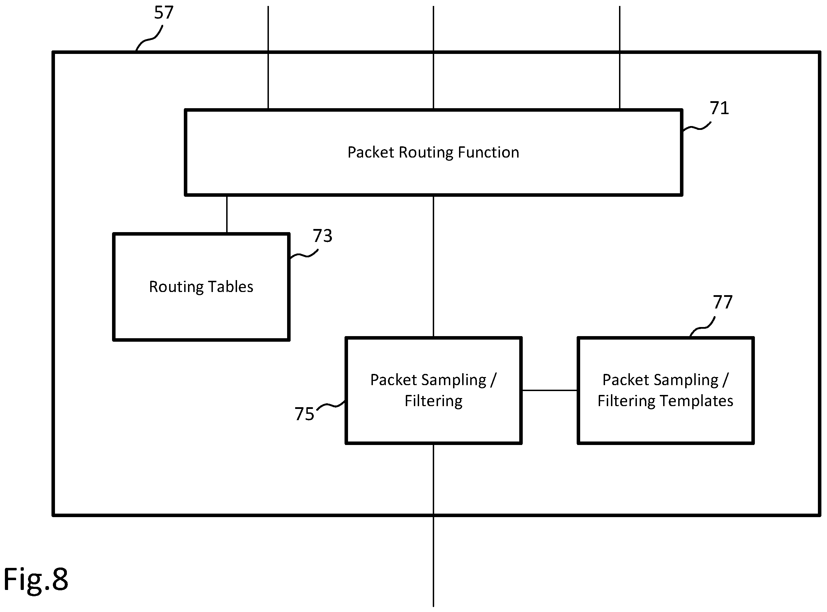

Figure 8 shows the components of the routing function 57 in more detail.

A packet router 71 performs the standard packet routing in accordance with rules in a routing table(s) 73. Data packets entering any of the wireless network interface 53, wired network interface 51 and wide area network interface 55 are routed to the correct interface in accordance with each packet's destination. The routing table 73 contains information relating to the location of each device 21 (identified by its MAC address and assigned IP address) connected to the local side of the hub 3 and the appropriate interface 51, 53, 55 that will enable a packet to reach the destination.

An example routing table 73 is shown below.

Device to IP Address table
Dev 1 (phone) MAC address 1 - 192.168.1.10 - Wireless
Dev 2 (tablet) MAC address 2 - 192.168.1.20 - Wireless
Dev 3 (laptop) MAC address 3 - 192.168.1.30 - Wireless
Dev 4 (desktop) MAC address 4 - 192.168.1.40 - Ethernet
Other device - other - WAN

In order to isolate the wireless network data packets, a packet sampling and filtering function 75 is configured to inspect the data packets and flowing via the packet router 71 and replicate only packets received from the wireless interface 53 or being directed to the wireless interface 53 to the hub flow analyser 59. The sampling and filtering is performed in accordance with packet sampling and filtering templates stored in packet sampling and filtering templates store 77. These templates are provided by the management server 27 at boot time and specify which packets are replicated, for example whether all wireless data packets are replicated, only the outbound packets received from the wireless interface 53, etc. Furthermore the management server 27 may send updated templates to change the reporting behaviour of the hub 3.

In this embodiment, the packet sampling and filtering function 75 also sends radiotap headers to the hub flow analyser 59. These headers are populated with information relating to the currently observed physical Wi-Fi link conditions such as modulation rate. The hub flow analyser 59 also records additional information related to the physical link (such as packet retry rates) retrieved from the Wi-Fi performance monitor 63 and relates it to the relevant flows.

### Hub Flow Analyser 59

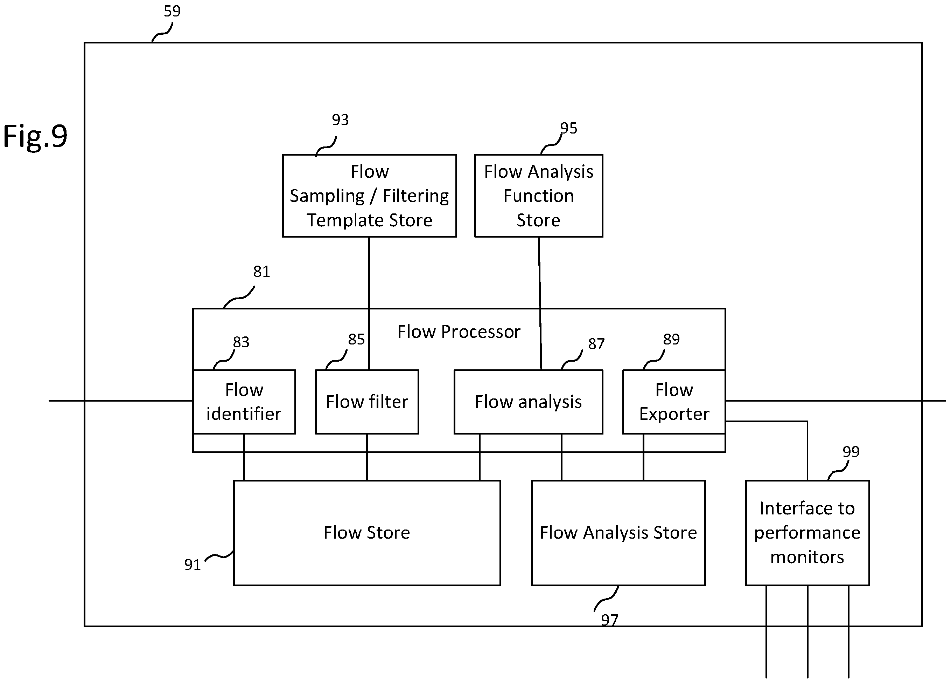

Figure 9 shows the components of the hub flow analyser 59. The hub flow analyser 59 is responsible for grouping the data packets replicated by the packet sampling/filtering function 75, in this case packets flowing via the wireless interface 53 and preparing information about the groups for transmission to the management server 27.

In this embodiment, the hub flow analyser 59 works with IP Flows. IP Flows are sets of data packets having the same n-tuple of source address, source port, destination address, destination port and protocol, representing a logical flow of data from one device to another and may represent particular data sessions, such as a VOIP call or gaming session. Degradation in these kinds of services would generally be noticeable to a user.

A flow processor 81 analyses the received data packets in a number of stages. The stages include a flow identifier function 83, a flow filter function 85, a flow analysis function 87 and a flow export function 89.

As packets arrive from the packet sampling/filter function 75, in the first stage, the flow identifier function 83 uses standard flow analysis techniques to create/update a set of flow records and stores them in a flow store 91.

An example set of flows stored in the flow store 83 is shown.

| Flow ID | Source Add | Source Port | Destination Add | Destination Port | Protocol |
|---|---|---|---|---|---|
| 1 | Dev 1 | 8080 | 173.194.41.166 | 2525 | TCP |
| 2 | Dev 2 | 24242 | 10.142.14.82 | 1573 | UDP |
| 3 | Dev 1 | 35167 | 173.194.41.160 | 37378 | TCP |
| 4 | Dev 3 | 11578 | 248.192.25.10 | 1825 | TCP |

Sending data about these flows would provide the management server with information about the type of data traffic generated by the user devices connected to the hub and data analysis could determine congestion information. However, as the number of hubs to be analysed increases, if every hub sends all flow information to the wireless management server 27 there would be a large processing burden.

Furthermore, when there are no connectivity problems, sending the flow records for healthy flows will waste resources. Therefore in this embodiment, the hubs are configured by the wireless management server to identify and filter the possible flow records so that only potentially problematic flows are sent to the wireless management server 27, together with a small subset of the healthy flows.

Once the set of flows being carried across the wireless interface 53 have been identified, the flow filter function 85 of the flow processor 81 compares the flows stored in the flow store 83 against a set of export rules defined in the Flow sampling/filtering template store 93. These rules are provided by the management server 27 at start-up time and may be updated by the management server 27 as required.

The aim of the filtering is to pick out flows which the management server 27 has determined to be sensitive to contention or interference. Generally these are high bandwidth or low latency tasks in which degraded performance would be noticed by the user and perceived to be due to a bottleneck in the network.

An example of the types of rule stored in the flow sampling/filtering template store 95 is shown below.

| Field | Selection Criteria | Action | Comment |
|---|---|---|---|
| IP address | Address in the following set: 173.194.41.160 to 173.194.41.169 173.194.41.174 | Mark for export | Select traffic to or from YouTube |
| Ingress/Egress Interface | WLAN | | Only look at traffic traversing the WLAN |

As a result of this comparison, only some of the flow records are selected. In this case, only flows 1 and 3 would be processed further since they match the above rule.

The above rule is for locating flows which should be exported to the management server 27. In marking them for export, two other rules are available in this embodiment. "Immediate discard" is where flows are ignored for further processing, and "post-analysis discard" where flows are to be processed by the later flow analysis functions, but aren't subsequently exported.

Once flows have been identified for further analysis, the properties of the packets within those identified flows together with supplementary information from the interface performance monitors will be analysed to create the flow record. To further reduce the processing burden, the packets can be sampled. In this embodiment a 1 in 10 sampling criteria is used, however any standard sampling criteria is envisaged, for example, random x% of packets, a hash match, etc.

### Flow analysis

The sampled and selected flows in the flow store 91 are also analysed by the flow analysis function 87 of the flow processor 81 to generate flow records in accordance with functions stored in the flow analysis function store 95. The functions are provided by the management server 27. The results of the analysis are stored in flow analysis store 97.

There are two types of function in the flow analysis function store 95.
- Type 1 - These are functions that are executed on each newly completed/identified flow as it is added to the flow store by the flow identifier;
- Type 2 - these functions are executed periodically (for example every few minutes) and typically will process multiple flow records together with inputs from the three performance monitors (the wireless LAN monitor63, the wired LAN monitor 61 and the WAN monitor 65) via performance monitor interface 99.

The results of the either of these types of processing can result in two kinds of output:
- A flow record or set of flow records are tagged with additional attributes and/or are tagged for export of discard. These supplemented flow records are stored in the Flow Analysis Store.
- Overall statistics or analyses are generated which do not necessarily correspond to a single flow (e.g. average throughput for a particular device; counts of failed flows for a particular device; total wireless network throughput). These latter analysis results are stored in the aggregate statistics store.

Pseudo code examples of the functions are set out below.

Example of Type 1 function in pseudo code:

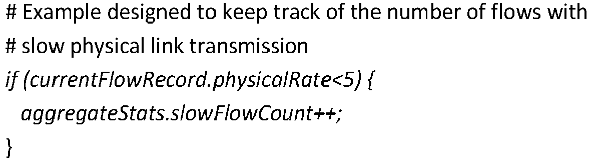

Another example of Type 1 function in pseudo code:

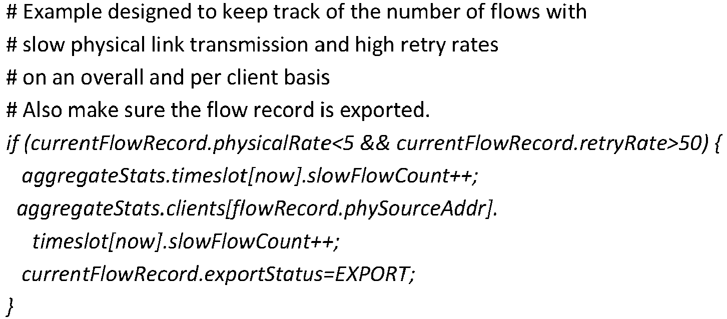

Example of Type 2 function in pseudo code:

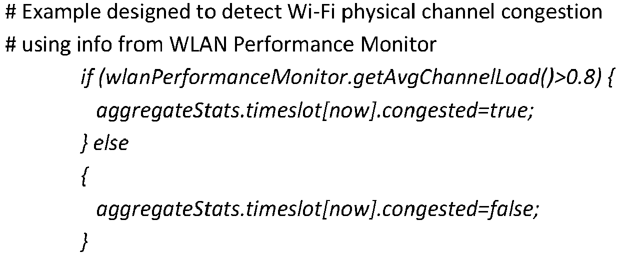

Another simplified example of Type 2 function in pseudo code:

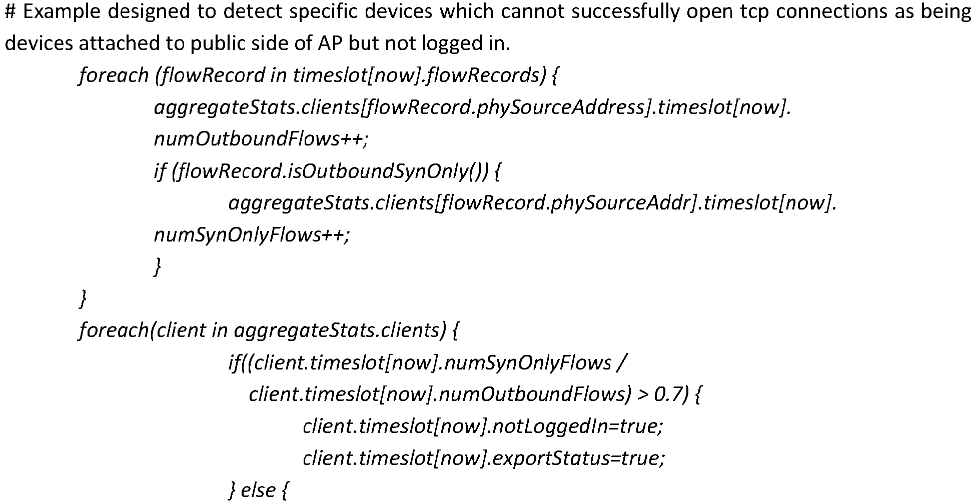

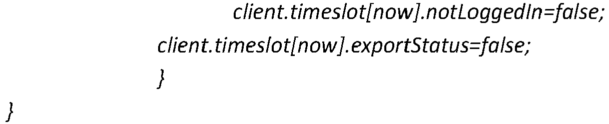

### Flow export

Having generated the flow records and statistics, the flow exporter function 89 of the flow processor 81 is arranged to periodically export the flow records which are marked for export to the management server 27 and then deletes any records which are explicitly marked for deletion. Other flows which are only marked for export are retained in the flow analysis store 97 until they are older than a predetermined age threshold.

In this embodiment, the data is transferred in the form of an IP Flow report using the IP Flow Information Export (IPFIX) IETF protocol. Details of IPFIX can be found at https://tools.ietf.org/wg/ipfix/.

In addition to flow records, the flow exporter 89 also exports the aggregate statistics relating to the flows marked for export over the same interval to the management server 27. The flow records and aggregate statistics contain a unique identifier for the hub 3 so that the management server 27 can return information to the hub 3.

If a response from the management server 27 is received on the WAN interface 55, the routing function 57 directs the packets to the hub status manager 66 which then causes the WLAN status lights 69 to activate in a manner which indicates to the user whether there are any detected problems on the Wi-Fi network 19.

In this embodiment, the LED 69 can flash different colours to indicate different severity levels, for example green if there is no problem, orange if there is mild or short term performance degradation, red if there is a major problem. Furthermore, if the management server 27 determines only a subset of the connected devices 21 are affected, the notification light 69 can flash in a pattern and/or in a manner to indicate how many devices are affected.

Furthermore, the hub status manager 66 will update a hub status page accessible to the user via a user interface to provide more detailed fault information such as identifying the extent of the fault and also which specific devices are affected.

### Components of the management server

In this embodiment each hub connected to the ISP network core 11 is arranged to send information relating the data sessions flowing over its wireless network to the management server 27. The management server 27 is responsible for processing the flow records exported by the hubs 3 and for each hub to identify whether there is a problem with that hub's Wi-Fi network. If congestion, interference or any other sort of degradation is detected, that hub is informed and the fault information can then be stored on the ISPs customer database so that the ISP is aware of the problem.

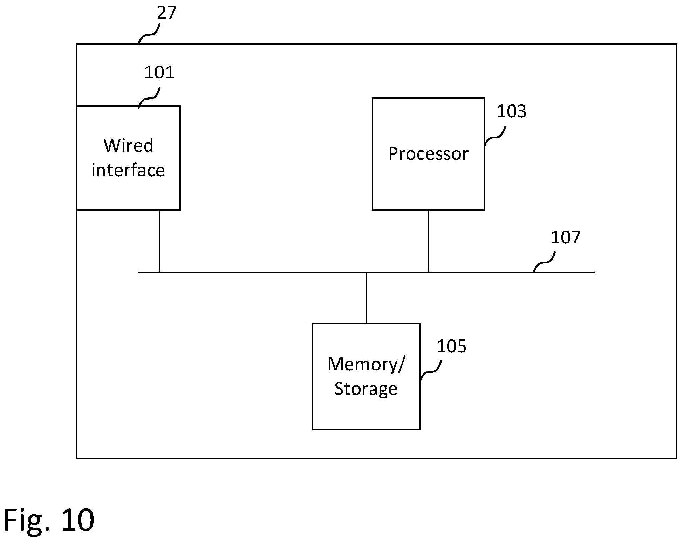

Figure 10 shows the main components of the management server shown in Figure 1. The management server 27 is located within the ISP network core 11 and therefore communicates with other network entities via at least one network interface 101 such as Ethernet.

A central processor 103 controls the flow of packets from and to the various ports via a storage medium 105 which includes random access memory (RAM) and processor buffers. The various components are communicately connected via a common data bus 107.

The central processor 103 controls the management server 27 in accordance with program instructions stored on the storage medium 105 or storage on a read only memory (ROM).

When the central processor 103 is executing the program instructions the management server 27 can be regarded as a number of functional component blocks as will be described in the next section.

### Management server functional components

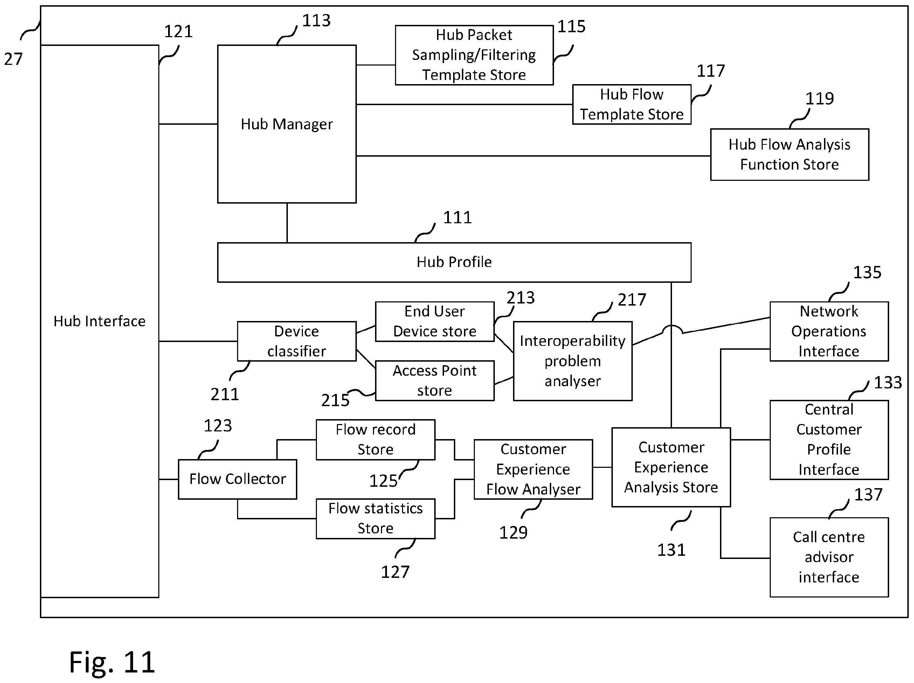

Figure 11 shows the functional components of the management server 27 in the first embodiment.

A hub profile 111 stores profile information for each hub that is connected to the ISP network 11. The profile contains information used by the other components to control their operation. Each hub's profile entry in the profile store 111 includes identification of which rules should be sent to that hub 3, the geographic location of the hub 3, whether problems have been detected which are affecting the operation of the hub's wireless network 19, etc. and is used by each of the components which will be described later.

The functionality of the management server 27 can be divided into two parts. The first part is concerned with configuring the hubs 3, usually at start up but updates can be pushed during normal operation in response to any detected conditions. Configuration data for the flow processing components of the hubs 3 is stored in a packet sampling filtering template store 115, a flow template store 117 and a flow analysis function store 119.

The hub packet sampling/filter template store 115 contains a complete set of all possible rules which can be used by the packet sampling filtering function 75 of the routing function 57 of a hub 3, stored in that hub's packet sampling/filtering template store 77, in deciding which packets are replicated to the hub flow analyser 59. The particular subset of available rules used by a particular hub are identified in the hub profile 111. In this embodiment the rules cause packets travelling from or heading to the wireless interface to be replicated.

The hub flow sampling/filtering template store 117 contains a complete set of all possible rules for deciding which types of flows are selected for export by the flow filter function 85 of a hub and stored in the hub's flow sampling/filtering template store 93. The particular subset of available rules used by a particular hub are identified in the hub profile 111. In this embodiment the rules select high priority flows which are sensitive to congestion such as video or VOIP.

The hub flow analysis function store 119 contains a complete set of all possible rules which can be used by the flow analysis function 87 of the flow processor 81 of a hub in analysing the flows to generate flow records and other analysis metrics. The particular subset of available rules used by a particular hub are identified in the hub profile 111. In this embodiment the hub 3 performs a number of functions to identify new flows and generate metrics relating to the health of those flows which are indicative of the performance of the wireless interface.

A hub manager 113 provides an interface for sending the data in the various stores to the hubs 3 in accordance with the subset information stored in the hub profile 111 for each hub 3. A hub interface 121 is present for data communications to and from the hubs 3 via the network core 11.

The second set of functional components within the management server 27 are for processing the flow record data sent from the hubs 3 to identify any degradation of the wireless network 19 for each hub, for example due to network contention or interference. This part contains a flow collector 123, a flow store 125, a flow statistics store 127, a customer experience flow analyser 129, a customer experience analysis store 131 which is connected to the hub profile 111, a central customer profile interface 133, a network operations interface 135 and a call centre advisor interface 137.

### Flow record collection

The flow collector 123 is the IPFIX complement of the hub flow exporter function 89 contained in each hub 3. Flow records and aggregates statistics are received from each hub 3 and stored into the flow records store 125 and the flow statistics store 127 respectively.

The Customer experience flow analyser 129 uses the information in the flow records store 125 and flow statistics store 127 to carry out various types of analysis. There are two main sets of analysis:
- Analysis of each individual hub's wireless network performance; and
- Analysis to determine patterns in wireless network performance.

The first type of analysis identifies problems with the wireless link for a particular hub 3. Examples include:
- Evaluation of average and peak utilisation of the WLAN;
- Evaluation of connection/disconnection frequency per device on the WLAN;
- Evaluation of physical layer connection quality for each device connected on the WLAN;
- Evaluation of radio interference; and
- Evaluation of throughput speeds of particular flows over time.

In these types of evaluations, the customer experience flow analyser129 looks for changes, generally drops, in the values as an indication of interference on the wireless network of the particular hub being analysed. Wi-Fi performance loss can be distinguished from a general DSL fault because the DSL performance monitor data will indicate if there have been any resynchronisations, changes in the data rate of the DSL connection or profile changes (indicative of a worsened SNR environment for the DSL connection) in the DSL line.

The customer experience flow analyser 129 maintains running average values of each metric and when there is a change greater than a threshold then the customer experience flow analyser 129 updates the customer experience analysis store 131 entry for that hub. Once all the evaluations have been carried out, the customer experience flow analyser 129 makes a final determination of the presence of network degradation for that hub 3.

If poor performance is determined to be occurring, the results of the analysis are stored in the customer experience analysis store. The hub profile 111 is updated and the hub manager 113 will notify the particular hub 3 so that it can update its LED notification and also the hub status page to provide the customer with more information relating to the detected problems. Furthermore, a number of externally connected interfaces such as the network operations interface 135, a central customer interface 133 and a call centre advisor interface 137 are able to access the customer experience analysis store 131 to update respective databases in the ISP network core 11.

The above processing by the customer experience flow analyser 129 determines whether the wireless network for a particular hub has deteriorated as an indication of contention or interference for that hub.

The second type of processing by the customer experience flow analyser 129 analyses the flow records and statistical data from multiple hubs to try to identify correlation and patterns in the wireless performance among groups of hubs. For example:
- Evaluation of throughput speeds to specific websites such as YouTube in relation to average speeds attained by users on similar speed WAN/DSL connections.
- Common faults affecting a group or groups of hubs.

To determine whether there may be device interoperability issues, the management server 27 also contains a device classifier 211, a user device store 213 and access point store 215 and an interoperability problem analyser 217.

To gather device information about the connected devices 21 and hubs 3, the device classifier 211 receives the DHCP request information sent by the DHCP monitor 203 of each hub 3 via the hub interface 121. The device classifier 211 uses DHCP fingerprinting techniques such as disclosed in FingerBank (www.fingerbank.org) to determine the at least one of the make, model and/or operating system of the user device 21 which issued the DHCP request based on analysis of the order of the option 55 parameter Request list items in each DHCP exchange. Following the DHCP fingerprinting, the extracted information is stored in the user device store 213 indexed by the device MAC address which is also included in the forwarded information from the DHCP monitor of the associated hub 3.

The device classifier 211 also, in the present embodiment, receives and processes received HTTP UAS information from the HTTP monitor 213 of each hub 3. The device classifier 211 uses the information in the UAS to classify the make and model and OS of the device 21 and to update the device entry in the device store 213 (previously created by the processing for the DHCP request and fingerprinting technique for that device 21 as indexed by its MAC address.

The device information gathered from DHCP and HTTP requests are stored in the user device store 213 so that it contains an entry for each connected device 21 of each hub 3 which are monitored by the management server 27, while hub 3 information is stored in the access point store 215.

Having gathered identity information for each user device connected to each hub, and furthermore having flow performance data for certain IP flows of the devices from the Customer Experience Analysis store 131, the interoperability problem analyser 217 analyses the collected data to try to identify interoperability issues. In this embodiment, the analysis includes creating frequency histograms and averages of each metric measured by the customer experience flow analyser 129 (and stored in customer experience flow store 131) for each collected device data field (device make, device model and/or device) and identifying trends of lower performance for certain device / hub combinations.

### Possible algorithm

The analysis may involve:

*For each hub:*
*Identify flows from the total number of good and bad flows which are performing poorly; For each identified flow:*
*Identify the corresponding device relating to that flow*

This will create for each hub a list of devices which are performing lower than expected given the rest of the devices connected to that hub.

In order to identify large scale trends, these lists of poor performing devices for each hub type are analysed together and grouped according to device type or OS version (for example). For example, if the list contains 100,000 devices with the same device identifier "Samsung Galaxy S2", and 90% of them are poorly performing when the average for all device types is much lower, this is a good indication that a device interoperability problem exists. For finer level analysis, the interoperability problem analyser can sort the instances of "Samsung Galaxy S2" according to OS version or hardware revision. This analysis results in a finding that there is uniform distribution in the poor performance based on the hardware revision, e.g. the fault occurs equally likely on an International Galaxy S2 or an AT&T Galaxy S2, however, all of the listed devices are Galaxy S2 devices which are running Android 2.3.

Examples of device incompatibility issues which would be flagged by the interoperability problem analyser include:
- devices which perform poorly with particular hub hardware revisions;
- devices which perform poorly with particular hub software revisions;
- devices which perform poorly when operating in particular network protocols modes (e.g. 802.11n 5GHz);
- devices which perform poorly with mixed 802.11 modes present (backwards compatibility);
- devices which perform poorly when other sets of devices are present;
- devices which are particularly sensitive to the presence of interference affecting the entire network for a particular hub.

Once possible device interoperability issues are identified, the interoperability problem analyser 217 sends the results to the network operations interface 135 so that the ISP operator is made aware of the potential problem. Possible actions by the operator include notifying the equipment manufacturers, issuing a fix on the hubs 3 if possible and/or updating an information page.

Once a device interoperability issue has been identified, the management server 27 can notify any hubs 3 connected to any of the identified devices exhibiting interoperability issues and the hub status manager 66 can alert the user.

In the first embodiment a system of hubs having wireless access points located at customer premises and a management server located in the ISP's network core are described. The hubs are modified to analyse data traffic passing via their Wi-Fi interface in accordance with rules and conditions provided by the management server, and then send reports about the traffic to the management server. The management server analyses the data to determine whether the customer's Wi-Fi network is experiencing wireless problems and alerts the customer. The management server further identifies device interoperability issues manifesting a reduced performance relative to the rest of the network.

### Alternatives and Modifications

In the embodiment, the hub is configured to send flow data to the management server to calculate whether interference is detected. Such an arrangement minimises the effect of the extra processing on the hub. In a modification, especially for newer hubs having greater processing capacity, the first type of processing can be carried out by the hub itself to identify wireless problems and the management server only needs to be notified of the results of the processing and carry out the second type of processing to look for problems affecting groups of hubs. In this modification, the hub contains further data stores to store historic profile information in order to determine thresholds and make a determination of wireless problems.

In the embodiment, the hub is arranged to only replicate wireless interface packets. In a modification, other interfaces can be monitored to detect problems in performance, for example, if the user wishes to monitor the performance of a Powerline Ethernet section of the network connected to a particular Ethernet port of the hub.

In the embodiment, both DHCP request fingerprinting and HTTP UAS processing is carried out to determine device identity. Such analysis provides both hardware and software information about the devices connected to each wireless access point. In an alternative, only DHCP fingerprinting is carried out and in a yet further alternative only HTTP UAS processing is performed.

In the embodiment, the hubs are arranged to obtain device identity information passively based on DHCP and/or HTTP requests. In a modification, the user is provided with the option of explicitly entering device type and version information into the hub interface. This information is passed to the management server and processing can be more accurate in identifying specific interoperability issues.

## Claims

1. A method for monitoring performance of a plurality of wireless networks (19) created by a plurality of wireless access points and connected client devices (21), said wireless networks being wireless local area networks, said method comprising:
receiving network performance data relating to at least some of the client devices from the plurality of wireless access points, wherein the network performance data comprises sets of data transfer rate metrics, each set relating to data sessions travelling between a wireless interface of one of the plurality of wireless access points and a wireless interface of a client device connected to said wireless access point;
receiving device characteristic information relating to each connected client device; and
analysing the performance data to identify trends in client devices which are experiencing wireless network performance degradation due to interoperability problems, wherein the analysing further comprises the steps of:
for each set of data transfer rate metrics:
identifying within that set, a subset of flows having reduced performance;
determining the client devices associated with the identified subset of flows;
grouping the determined client devices according to a device type;
upon determining a group of client devices that is poorly performing, performing a finer level analysis by sorting the client devices in the group according to an operating system version or a hardware revision; and
determining, for the client devices in the group and as a result of the finer level analysis, a device property among the operating system version and the hardware revision, which is indicative of a device interoperability issue.

2. A method according to Claim 1, wherein the received device characteristic information relating to each connected client device is derived from an analysis of DHCP requests relating to each connected device.

3. A method according to Claim 1 or 2, wherein the received device characteristic information relating to each connected client device (21) is derived from an analysis of HTTP requests relating to each connected device.

4. Apparatus for monitoring performance of a plurality of wireless networks (19) created by a plurality of wireless access points and connected client devices (21), said wireless networks being wireless local area networks, said apparatus being configured to perform the method of Claim 1.

5. Apparatus according to Claim 4, wherein the received device characteristic information relating to each connected client device (21) is derived from an analysis of DHCP requests relating to each connected device.

6. Apparatus according to Claim 4 or 5, wherein the received device characteristic information relating to each connected client device (21) is derived from an analysis of HTTP requests relating to each connected device.

7. A computer program product comprising computer-executable instructions which, when executed by a computer, cause the computer to perform the steps of the method of any one of Claims 1 to 3.

## Patentansprüche

1. Verfahren zur Überwachung der Leistung einer Mehrzahl von drahtlosen Netzwerken (19), die durch eine Mehrzahl von drahtlosen Zugangspunkten und angeschlossenen Client-Geräten (21) gebildet werden, wobei die drahtlosen Netzwerke drahtlose lokale Netzwerke sind, und das Verfahren umfasst:
Empfangen von Netzwerkleistungsdaten in Bezug auf wenigstens einige der Client-Geräte von der Mehrzahl von drahtlosen Zugangspunkten, wobei die Netzwerkleistungsdaten Sätze von Datenübertragungsraten-Metriken umfassen, wobei sich jeder Satz auf Datensitzungen bezieht, die sich zwischen einer drahtlosen Schnittstelle eines der Mehrzahl von drahtlosen Zugangspunkten und einer drahtlosen Schnittstelle eines an den drahtlosen Zugangspunkt angeschlossenen Client-Geräts bewegen;
Empfangen von Gerätemerkmalsinformationen in Bezug auf jedes angeschlossene Client-Gerät; und
Analysieren der Leistungsdaten, um Tendenzen von Client-Geräten zu identifizieren, die Drahtlosnetzwerkleistungsverschlechterung aufgrund von Interoperabilitätsproblemen erfahren, wobei das Analysieren ferner die folgenden Schritte umfasst:
für jeden Satz von Datenübertragungsraten-Metriken:
Identifizieren innerhalb dieses Satzes eines Teilsatzes von Flüssen mit reduzierter Leistung;
Bestimmen der Client-Geräte, die mit dem identifizierten Teilsatz von Flüssen assoziiert sind;
Gruppieren der bestimmten Client-Geräte gemäß einem Gerätetyp;
Durchführen bei Bestimmen einer Gruppe von Client-Geräten mit schlechter Leistung einer Analyse mit größerer Detailtiefe durch Sortieren der Client-Geräte in der Gruppe gemäß einer Betriebssystemversion oder einer Hardwarerevision; und
Bestimmen für die Client-Geräte in der Gruppe und als Ergebnis der Analyse mit größerer Detailtiefe einer Geräteeigenschaft unter der Betriebssystemversion und der Hardwarerevision, die ein Interoperabilitätsproblem des Geräts anzeigt.

2. Verfahren nach Anspruch 1, wobei die empfangenen Gerätemerkmalsinformationen in Bezug auf jedes angeschlossene Client-Gerät aus einer Analyse von DHCP-Anforderungen in Bezug auf jedes angeschlossene Gerät abgeleitet werden.

3. Verfahren nach Anspruch 1 oder 2, wobei die empfangenen Gerätemerkmalsinformationen in Bezug auf jedes angeschlossene Client-Gerät (21) aus einer Analyse von HTTP-Anforderungen in Bezug auf jedes angeschlossene Gerät abgeleitet werden.

4. Vorrichtung zum Überwachen der Leistung einer Mehrzahl von drahtlosen Netzwerken (19), die durch eine Mehrzahl von drahtlosen Zugangspunkten und angeschlossenen Client-Geräten (21) gebildet werden, wobei die drahtlosen Netzwerke drahtlose lokale Netzwerke sind, und die Vorrichtung zum Durchführen des Verfahrens nach Anspruch 1 konfiguriert ist.

5. Vorrichtung nach Anspruch 4, wobei die empfangenen Gerätemerkmalsinformationen in Bezug auf jedes angeschlossene Client-Gerät (21) aus einer Analyse von DHCP-Anforderungen in Bezug auf jedes angeschlossene Gerät abgeleitet werden.

6. Vorrichtung nach Anspruch 4 oder 5, wobei die empfangenen Gerätemerkmalsinformationen in Bezug auf jedes angeschlossene Client-Gerät (21) aus einer Analyse von HTTP-Anforderungen in Bezug auf jedes angeschlossene Gerät abgeleitet werden.

7. Computerprogrammprodukt, umfassend computerausführbare Anweisungen, die bei Ausführung durch einen Computer den Computer zum Ausführen der Schritte des Verfahrens nach einem der Ansprüche 1 bis 3 veranlassen.

## Revendications

1. Procédé pour surveiller les performances d'une pluralité de réseaux sans fil (19) créés par une pluralité de points d'accès sans fil et de dispositifs clients connectés (21), lesdits réseaux sans fil étant des réseaux locaux sans fil, ledit procédé comprenant les étapes suivantes :
recevoir des données de performance de réseau se rapportant à au moins certains des dispositifs clients depuis la pluralité de points d'accès sans fil, où les données de performance de réseau comprennent des ensembles de mesures de débit de transfert de données, chaque ensemble se rapportant à des sessions de données circulant entre une interface sans fil d'un point d'accès sans fil parmi la pluralité de points d'accès sans fil et une interface sans fil d'un dispositif client connecté audit point d'accès sans fil ;
recevoir des informations de caractéristiques de dispositif se rapportant à chaque dispositif client connecté ; et
analyser les données de performance pour identifier les tendances dans les dispositifs clients qui subissent une dégradation des performances du réseau sans fil du fait de problèmes d'interopérabilité, où l'analyse comprend en outre les étapes suivantes :
pour chaque ensemble de mesures de débit de transfert de données :
identifier, dans cet ensemble, un sous-ensemble de flux ayant des performances réduites ;
déterminer les dispositifs clients associés au sous-ensemble de flux identifié ;
regrouper les dispositifs clients déterminés en fonction d'un type de dispositif ;
lors de la détermination d'un groupe de dispositifs clients qui est peu performant, procéder à une analyse de niveau plus fin en triant les dispositifs clients du groupe selon une version du système d'exploitation ou une révision matérielle ; et
déterminer, pour les dispositifs clients du groupe et à la suite de l'analyse de niveau plus fin, une propriété du dispositif parmi la version du système d'exploitation et la révision matérielle, qui est indicative d'un problème d'interopérabilité du dispositif.

2. Procédé selon la revendication 1, dans lequel les informations de caractéristiques de dispositif reçues se rapportant à chaque dispositif client connecté sont dérivées d'une analyse de requêtes DHCP se rapportant à chaque dispositif connecté.

3. Procédé selon la revendication 1 ou la revendication 2, dans lequel les informations de caractéristiques de dispositif reçues se rapportant à chaque dispositif client connecté (21) sont dérivées d'une analyse de requêtes http se rapportant à chaque dispositif connecté.

4. Appareil pour surveiller les performances d'une pluralité de réseaux sans fil (19) créés par une pluralité de points d'accès sans fil et de dispositifs clients connectés (21), lesdits réseaux sans fil étant des réseaux locaux sans fil, ledit appareil étant configuré pour exécuter le procédé de la revendication 1.

5. Appareil selon la revendication 4, dans lequel les informations de caractéristiques de dispositif reçues se rapportant à chaque dispositif client connecté (21) sont dérivées d'une analyse des requêtes DHCP se rapportant à chaque dispositif connecté.

6. Appareil selon la revendication 4 ou la revendication 5, dans lequel les informations de caractéristiques de dispositif reçues se rapportant à chaque dispositif client connecté (21) sont dérivées d'une analyse des requêtes HTTP se rapportant à chaque dispositif connecté.

7. Produit programme informatique comprenant des instructions exécutables par ordinateur qui, lorsqu'elles sont exécutées par un ordinateur, amènent l'ordinateur à exécuter les étapes du procédé de l'une quelconque des revendications 1 à 3.
